Europäisches Patentamt

European Patent Office

Office européen des brevets

(19)

(11) Veröffentlichungsnummer: **0 279 876 B1**

(12) **EUROPÄISCHE PATENTSCHRIFT**

(45) Veröffentlichungstag der Patentschrift: 27.02.91

(51) Int. Cl.⁵: **B60K 5/12**

(21) Anmeldenummer: 87102494.9

(22) Anmeldetag: 21.02.87

(54) **Lagerung für ein Antriebsaggregat eines Kraftfahrzeugs.**

(43) Veröffentlichungstag der Anmeldung:
31.08.88 Patentblatt 88/35

(45) Bekanntmachung des Hinweises auf die
Patenterteilung:
27.02.91 Patentblatt 91/09

(84) Benannte Vertragsstaaten:
DE ES FR GB IT NL SE

(56) Entgegenhaltungen:
US-A- 2 084 080
US-A- 3 473 620

PATENT ABSTRACTS OF JAPAN, Band 6, Nr.
246 (M-176)[1124], 4. Dezember 1982; & JP-
A-57 144 126 (NISSAN JIDOSHA K.K.)
06-09-1982

Idem

(73) Patentinhaber: Dr.Ing.h.c. F. Porsche Aktiengesellschaft
Porschestrasse 42
D-7000 Stuttgart 40(DE)

(72) Erfinder: Freyer, Hans, Dipl.-Ing.
Tiefentalstrasse 15
D-7500 Karlsruhe(DE)
Erfinder: von Mallinckrodt, Gerhard, Dipl.-Ing.
Otto-Stolpp-Strasse 12
D-7130 Mühlacker 3(DE)
Erfinder: von Broock, Ulrich, Dr. Dipl.-Ing.
Eberdinger Strasse 58
D-7251 Weissach(DE)

## Beschreibung

Die Erfindung bezieht sich auf eine Lagerung nach dem Oberbegriff des Anspruchs 1.

Es sind Lagerungen für Antriebsaggregate von Kraftfahrzeugen aus der JP-A-57-144 126 bekannt, bei denen die Lager in einer in Höhe des Aggregate-Schwerpunktes angeordneten Ebene aufbauseitig gehalten werden und die Roll- und Kippmomente aufnehmen.

Das Antriebsaggregat wird im Betrieb des Fahrzeugs zu mehreren Bewegungen angeregt, die durch Fahrbahnunebenheiten und/oder durch Lastwechsel entstehen. Diese Aggregat-Bewegungen weisen - in bezug auf die Lager - verschiedene Richtungen auf. So können Bewegungen in Hochrichtung als Hubbewegungen und um eine Querachse als Nickbewegungen und um eine Längsachse des Aggregats als Rollbewegungen auftreten. Diese verschiedenen Bewegungen des Aggregats werden in die schräggestellten Lager unter einem stumpfen bzw. unter einem etwa rechten Winkel zur Längsachse eingeleitet, so daß keine maximale Dämpfungswirkung von den Lagern erbracht werden kann, da die Richtung der maximalen Dämpfung nur axial zu den Lagern, d. h. in Richtung der Längsachse erzielbar ist. Es können dadurch starke Schwingungen in den für Personen unangenehmen Frequenzbereichen auftreten, die nicht wirkungsvoll bedämpfbar sind und eine negative Auswirkung auf den Fahrkomfort haben.

Die Aufgabe der Erfindung ist es, eine Lagerung für ein Antriebsaggregat eines Kraftfahrzeugs zu schaffen, die durch ein günstiges Schwingungsverhalten des Antriebsaggregates einen verbesserten Fahrkomfort gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen in einer Verbesserung des Fahrkomforts durch eine optimale Bedämpfung von Aggregatbewegungen wie Hub-, Nick- und Rollbewegungen bzw. deren Schwingungsformen. Diese Schwingungen werden durch die in Höhe des Schwerpunkts angeordneten Lager wirksam bedämpft, weil in deren maximaler Dämpfungsrichtung die aus Hub, Nick- und Rollen resultierenden Bewegungen eingehen.

Diese nach der Erfindung nur zur zentrischen Längsache der Lager ausgerichteten Bewegungen des Aggregats vermeiden eine Verspannung des Lagers in den verschiedenen Richtungen wie nach der bekannten Ausführung.

Durch eine definierte Länge der Lagertragarme des Motors kann bei der Verwendung von Hydrolagern eine solche Abstimmung erzielt werden, daß die Rollfrequenz des Aggregats in einem günstigen Dämpfungsbereich des Hydrolagers liegt.

Durch diese erfindungsgemäße Lageranordnung wird insbesondere ein Lastwechselruckeln, ein Konstantfahrruckeln und ein Motortuckern durch Fahrbahnstöße wirksam verbessert.

Ein Ausführungsbeispiel der Erfindung ist in der Zeichnung dargestellt und wird im folgenden näher beschrieben.

Es zeigen

Fig. 1 eine Ausführung einer Lageranordnung nach dem Stand der Technik mit schräg angestellten Hydrolagern,

Fig. 2 eine erfindungsgemäße Anordnung von vertikal ausgerichteten Motorlagern eines Antriebsaggregats,

Fig. 3 eine Seitenansicht des Antriebsaggregats mit Motor- und Getriebelagern,

Fig. 4 eine schematische Darstellung einer Ausführung von am Längsträger am Fahrzeugaufbau angeordneten Motorlagern und einem am Längsträger elastisch gehaltenen Fahrschemel,

Fig. 5 eine Schaubild über eine dynamische Federrate eines Hydrolagers, und

Fig. 6 ein Schaubild über eine frequenzabhängige Dämpfung eines Hydrolagers.

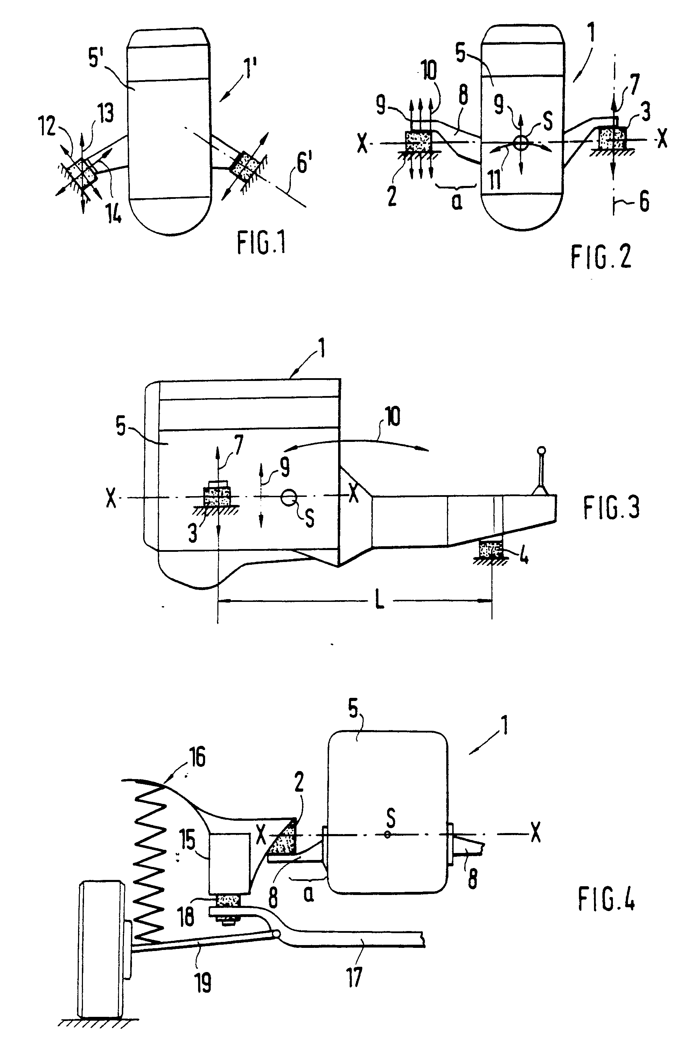

Gemäß der Fig. 2 und 3 weist ein Kraftfahrzeug ein Antriebsaggregat 1 mit zwei vertikal ausgerichteten Motorlagern 2 und 3 und mindestens einem Getriebelager 4 auf. Die Lager 2 und 3 sind beidseitig eines Motors 5 angeordnet, in Tragarmen 8 mit einem Abstand a und einer durch den Schwerpunkt S des gesamten Aggregats verlaufenden horizontalen Ebene X-X angeordnet.

Die einzelnen, durch äußere Anregungen entstehenden Starrkörperschwingungen des Aggregats 1 führen bei der Anordnung der Lager 2 und 3 in der Ebene X-X durch den Schwerpunkt S zu resultierenden, nahezu vertikalen Bewegungen an den Lagerpunkten. In Fig. 2 sind diese Bewegungen am Lager 2 symbolisch durch Pfeile 9 und 10 dargestellt. Das Lager 3 wird entsprechend wie das Lager 2 belastet, was nicht näher dargestellt ist.

Diese Bewegungen fallen in ihren Richtungen mit den Lagerlängsachsen 6 und somit mit der Richtung der maximalen Dämpfung der Lager 2 und 3 zusammen.

Im Gegensatz hierzu sind nach dem Stand der Technik gemäß Fig. 1 die Lager schräg zum Motor 5' angestellt und weisen Längsachsen 6' auf, die einen Schnittpunkt bilden. Es werden durch die Einstellung der beiden Lager Schwingungsformen angeregt, die einen Federweg bei Aggregaterollen in Pfeilrichtung 12 und bei einer Hubbewegung in Pfeilrichtung 13 ergeben, wobei die maximale Dämpfung nur in Pfeilrichtung 14, d.h. zentrisch zur Längsachse 6' erfolgen kann.

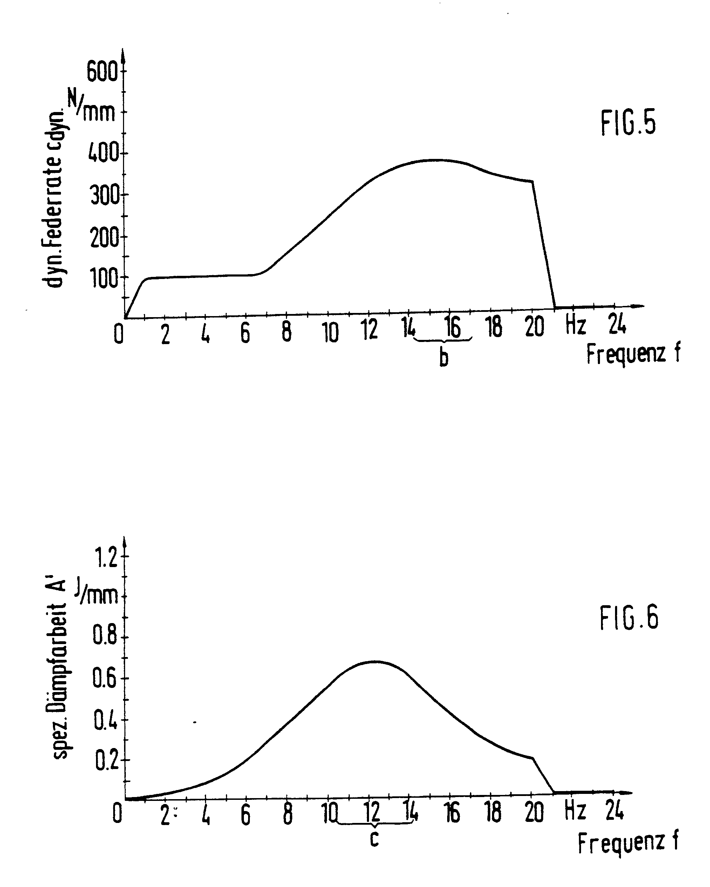

Als Motorlager werden nach der Erfindung insbesondere Hydrolager verwendet, die einen spezifischen Verlauf einer Lagerkennung aufweisen, wie sie in Fig. 5 anhand einer Kurve beispielsweise näher dargestellt ist. Im Bereich 11 Hz wird bei einem Hydrolager die maximale Federrate erreicht. Überlicherweise liegt in diesem Bereich ein ausgeprägtes Dämpfungsmaximum.

Damit in diesem Bereich die Rollfrequenz des Aggregats 1 liegt, weisen die Tragarme 8 eine entsprechende Länge a auf. Bei kürzeren Tragarmen 8 wird z. B. die Rollfrequenz nur 6 Hz aufweisen und dann im Bereich der niedrigeren Steifigkeit von nur 100 n/mm liegen und bei dem beispielhaft aufgezeigten Lager nahezu keine Dämpfung wirksam werden.

Somit ist es erforderlich, daß die Tragarme 8 eine definiert abgestimmte Länge aufweisen, so daß die Rollfrequenz des Aggregats 1 im Frequenzbereich b (Fig. 5) der größten dynamischen Federsteifigkeit und im Bereich c (Fig. 6) der größten Dämpfungswirkung des Hydrolagers liegt.

Die Abstimmung der Eigenfrequenz der Starrkörperschwingungen des Aggregats führt zu einem akustischen Vorteil. Werden die optimalen Steifigkeits- und Dämpfungswerte eines Hydrolagers genutzt, kann die Grundsteifigkeit beträchtlich abgesenkt und damit das Isolationsverhalten deutlich verbessert werden.

Zur Erzielung einer ausgeprägten Nickbewegung (Pfeilrichtung 10) des Aggregats 1 soll der Abstand von den Motorlagern 2, 3 bis zum Getriebelager 4 möglichst einen großen Abstand L aufweisen. Diese Nickbewegungen können mit den Hubbewegungen gekoppelt sein, was keine wesentliche Änderung der Einwirkung auf das Lager gemäß Fig. 2 entsprechend der Pfeilrichtung 9, 10 bewirkt.

Insbesondere wird die erfindungsgemäße Lageranordnung für Fahrzeuge mit einem vornliegenden Antriebsaggregat verwendet, das zum Antrieb der Hinterräder eine Kardanwelle aufweist.

Die Lager 2 und 3 sind vorzugsweise, wie Fig. 4 näher zeigt, direkt an einem Längsträger 15 des Fahrzeugaufbaus 16 abgestützt und ein Fahrschemel 17 ist über elastisches Elemente 18 im Bereich der Lager 2, 3 am Längsträger 15 befestigt. Der Lagerort am Längsträger 15 ist an einem Platz hoher Impedanz vorgesehen, wobei zusätzlich örtliche Versteifungen angebracht sein können. Diese Anordnung der Lager 2, 3 bewirkt über die optimierte Schwingungsdämpfung des Aggregats 1 in den Lagern 2, 3 hinaus noch, daß motorangeregte Restvibrationen nicht in den Fahrzeugaufbau 8 zur Geräuschverschlechterung eingeleitet werden, wozu auch der separat am Längsträger 15 elastisch befestigte Fahrschemel 17 beiträgt, an dem nur die Radführungslenker 19 angelenkt sind.

## Ansprüche

1. Lagerung für ein Antriebsaggregat eines Kraftfahrzeugs über Hydrolager, die zu beiden Seiten des Motors und am Getriebe angeordnet sind und das Aggregat federnd zum Fahrzeugaufbau hin abstützen und die Lager (2 und 3) in Höhe des Schwerpunktes (S) und im Abstand (a) zum Motor (5) angeordnet und vertikal derart ausgerichtet sind, daß die Federwege des angeregten Aggregats gleichgerichtet mit den vertikalen Lager-Längsachsen (6) verlaufen, **dadurch gekennzeichnet,** daß jede aus einer Hub- und Nickbewegung und einer Rollbewegung resultierende Einfederungsbewegung des Lagers (2 und 3) diesen in der Weise getrennt zuführbar und gemeinsam bedämpfbar ist, daß durch eine definierte Länge (a) der Tragarme (8) die Frequenz der Rollbewegung im Bereich (b) der größten dynamischen Federsteifigkeit und im Bereich (c) der größten Dämpfungswirkung des Hydrolagers liegt und daß die Motorlager (2 und 3) zu dem Getriebelager (4) einen maximalen Abstand (L) zur Erzielung von ausgeprägten Hub- und Nickbewegungen mit einer Frequenz im Bereich (b) entsprechend der Rollbewegung aufweisen.

2. Lagerung nach den Ansprüchen 1 oder 2, dadurch gekennzeichnet. daß das Verhältnis der Federsteifigkeiten der Lager (2 und 3) in Axialrichtung und in Querrichtung im Verhältnis von 1 : 0,7 stehen.

## Claims

1. A mounting for a drive unit of a motor vehicle by way of hydraulic bearings arranged on both sides of the engine and on the transmission and supporting the unit resiliently on the bodywork, the bearings (2 and 3) being arranged at the level of the centre of gravity (S) and at a distance (a) from the engine (5) and being vertically orientated in such a way that the spring paths of the actuated unit extend in the same direction as the vertical longitudinal axes (6) of the bearings. characterized in that each resilient movement of the bearing (2 and 3) resulting from a lifting and pitching motion and a rolling motion can be separately transmitted thereto and jointly damped. in such a way that by virtue of a defined length (a) of the support arms (8) the frequency of the rolling motion lies in the area (b) of the greatest dynamic spring stiffness and in the area (c) of the greatest damping action of the hydraulic bearing, and the engine bearings (2 and 3) are at a maximum distance (L) from the transmission bearing (4) in order to achieve pronounced lifting and pitching motions with a frequency in area (b) corresponding to the rolling motion.

2. A mounting according to Claim 1 or 2 [sic], characterized in that the ratio of the spring stiffnesses of the bearings (2 and 3) in the axial direction and in the transverse direction are in the ratio of 1 : 0·7.


## Revendications

1. Ensemble support pour le bloc moteur d'un véhicule automobile utilisant des supports hydrauliques qui sont placés des deux côtés du moteur et sur la boîte de vitesses et supportent le bloc élastiquement vis-à-vis de la carrosserie du véhicule et les supports (2 et 5) sont placés au niveau du centre de gravité (5) et à la distance (a) du moteur (5) et sont orientés verticalement de telle façon que les courses élastiques du bloc mis en mouvement sont dirigées dans la même direction que les axes longitudinaux verticaux (6) des supports, caractérisé en ce que chaque mouvement de compression élastique du support (2 et 3), résultant d'un mouvement vertical et de tangage et d'un mouvement de roulis peut leur être communiqué séparément et être amorti en commun de telle façon que, grâce à une longueur définie (a) des bras de support (8), la fréquence du roulis est située dans le domaine (b) de la plus forte rigidité élastique dynamique et dans le domaine (c) du plus fort effet d'amortissement du support hydraulique, et en ce que les supports de moteur (2 et 3) présentent par rapport au support de transmission (4) une distance (L) maximale pour obtenir des mouvements verticaux et de tangage marqués d'une fréquence située dans le domaine (b) correspondant au roulis.

2. Ensemble support selon la revendication 1, caractérisé en ce que le rapport des rigidités élastiques des supports (2 et 3) en direction axiale et en direction transversale est de 1 : 0,7.

FIG.1

FIG.2

FIG.3

FIG.4

FIG.5

FIG.6